# EUROPEAN PATENT APPLICATION

(11) **EP 3 783 256 A1**
(43) Date of publication of application: **24.02.2021**
(21) Application number: 18913367.1
(22) Date of filing: 15.11.2018
(51) Int. Cl.: F21S 4/24, F21V 23/06

(54) **ENCAPSULATED LED STRIP WITHOUT A POWER SUPPLY**

(30) Priority: 06.04.2018 ES 201830477 U
(71) Applicant: Ohmio Servicios Integrales, S.L., 28981 Parla Madrid (ES)
(72) Inventor: PEREIRA GONZÁLEZ, Andrés, 28981 Parla (Madrid) (ES)
(74) Representative: Capitán García, Maria Nuria
(86) International application number: PCT/ES2018/070737
(87) International publication number: WO 2019/193218

(57) **Abstract**

The invention relates to an encapsulated LED strip without a power supply, allowing same to be connected directly to an alternating current supply grid, said strip being connectable to alternating current and comprising a laminar support to one or both faces of which LEDs are attached, a cover that completely surrounds the support with the LEDs, a connector connected to one end of the support followed by at least one conductive cable, further comprising a rectifier circuit and a current stabilizer.

## Description

### Technical Field of the Invention

The present invention is comprised in the field of LED strips making up linear lighting system with LEDs, specifically LED strips that are encapsulated with a cover.

### Background of the Invention

Flexible LEDs strips encapsulated in a translucent or transparent cover are known.

LED strips are typically used indoors or outdoors, but connected to the common power supply grid for homes, such as the 110 V/125 V or 220 V/240 V alternating current grid.

The components of the LED strip connected to said grid must be powered by means of a power supply (also known as "driver") which transforms alternating current of the grid into direct current suitable for powering the LED strip.

To that end, LED strips have power supplies that are bulky, heavy, and expensive. Additionally, they furthermore have the limitation of being sized for a specific load, making it impossible to connect more than a certain number of meters of LED strip to said power supply. This is very important because the capacity of the power supply is not usually in accordance with the consumption of the LED strip since its length is variable as it can be cut as desired. This requires a solution like the one being proposed in which instead of having a single bulky external power supply, a miniaturized circuit is designed.

### Description of the Invention

The present invention is set forth and characterized in the independent claims, while other features thereof are described in the dependent claims.

The object of the invention relates to an encapsulated LED strip without a power supply, allowing same to be connected directly to an alternating current supply grid. The technical problem to be solved is to configure the LED strip so as to obtain the mentioned object.

The present invention relates to an encapsulated LED strip without a power supply which is connectable to alternating current and comprises a laminar support, the printed circuit board (PCB) with its connections, to one or both faces of which LEDs are attached, a cover that completely surrounds the support with the LEDs, encapsulating same, a connector connected to one end of the support followed by at least one conductive cable, as is known in the state of the art.

The invention is characterized in that it further comprises a rectifier and a current stabilizer, such that the direct connection thereof to the alternating current grid is thereby allowed without having to add any power supply to the LED strip or arrange a power supply external thereto.

### Brief Description of the Figures

The present specification is complemented with a set of figures that illustrate the preferred example and in no way limit the invention.

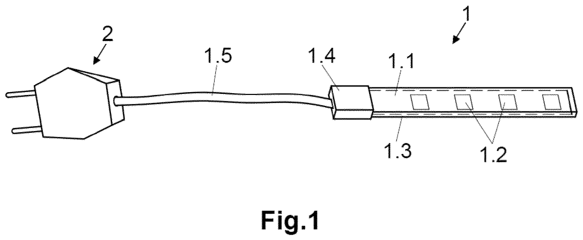

Figure 1 depicts a perspective view of a LED strip according to the invention.

### Detailed Description of the Invention

Figure 1 shows an encapsulated LED strip without a power supply (1) which is connectable to alternating current and comprises a laminar support (1.1) to one or both faces of which LEDs (1.2) are attached, as depicted, a cover (1.3) that completely surrounds the support (1.1) with the LEDs (1.2), a connector (1.4) connected to one end of the support (1.1) followed by at least one conductive cable (1.5) that ends in a plug (2) in the depiction of the figure, although it may also be connected to the terminals of a junction box; the LED strip furthermore includes a rectifier circuit and a current stabilizer that are not explicitly depicted but can be placed in any location, for example in the connector (1.4) .

Specifically, the rectifier circuit includes constant regulation adjustable by means of a high precision resistor and with protection against heating up.

Preferably, a rectifier circuit will preferably be placed on each side of the end LEDs (1.2), not depicted in the figure, i.e., of the LED lighting area, so as not to interfere with the light field, and each circuit will include at least one high-voltage diode.

## Claims

1. An encapsulated LED strip without a power supply (1) connectable to alternating current, comprising a laminar support (1.1) on one or both faces of which LEDs (1.2) are attached, a cover (1.3) that completely surrounds the support (1.1) with the LEDs (1.2), a connector (1.4) connected to one end of the support (1.1) followed by at least one conductive cable (1.5), **characterized in that** it further comprises a rectifier circuit and a current stabilizer.

2. The LED strip according to claim 1, wherein the rectifier circuit includes constant regulation adjustable by means of a high precision resistor and with protection against heating up.
